# EUROPEAN PATENT SPECIFICATION

(11) **EP 0 768 373 B1**
(45) Date of publication and mention of the grant of the patent: **21.04.1999**
(21) Application number: 96307420.8
(22) Date of filing: 10.10.1996
(51) Int. Cl.: C12G 3/12

(54) **Improvements in and relating to spirit drinks**
Verbesserung von Branntweinen
Améliorations concernant des eaux-de-vie

(30) Priority: 10.10.1995 GB 9520706
(43) Date of publication of application: 16.04.1997
(73) Proprietor: Newhaven Properties Limited, Isle of Man (GB)
(72) Inventor: Dixon, Andrew, Russian, Isle of Man IM9 4PL (GB); Pollock, James, Upper Basildon, Berkshire, RG8 8NE (GB)
(74) Representative: Lawrence, John

(56) References cited:
- DATABASE WPI Section Ch, Derwent Publications Ltd., London, GB; Class D16, AN 70-40881R XP002050338 & SU 250 086 A (SHPRITSMAN EM TOKHMAKHCHI)
- DATABASE WPI Section Ch, Week 9322 Derwent Publications Ltd., London, GB; Class D16, AN 93-180506 XP002050339 & SU 1 738 837 A (FOOD BIOTECHN RES INST) , 7 June 1992
- DATABASE WPI Section Ch, Week 9424 Derwent Publications Ltd., London, GB; Class D16, AN 94-198605 XP002050340 & SU 1 807 078 A (YALOVENY RES PRODN ASSOC) , 7 April 1993
- DATABASE WPI Section Ch, Week 8330 Derwent Publications Ltd., London, GB; Class D16, AN 83-721181 XP002050341 & SU 958 485 A (FOOD IND CORRESPOND) , 15 September 1982

## Description

This invention relates to spirit drinks, such as whiskey, and to a method of producing them.

The traditional way of making a spirit drink, such as whiskey, is to ferment a sugar source, such as grain, malted or not, and to distil the resulting liquid once or more times to produce an initial spirit. This initial spirit is then matured by keeping it in, for example, oak barrels for, say, from 3 to 10 years, or even longer. Each year about 2 or 3% of the alcohol in the spirit evaporates and flavours leach into the spirit from the wood. The longer a spirit is kept to mature the smoother and more flavoursome it becomes.

This concentrates the flavour of the spirit (e.g. whiskey). The cask strength whiskey is then usually diluted down to bottle strength, bottled, and sold.

It is an aim of the invention to provide a new way of producing a spirit drink.

According to a first aspect of the invention we provide a method of producing a potable spirit comprising taking a matured spirit; fractionating it into a plurality of fractions; and re-combining at least a portion of at least some of the fractions to produce a potable spirit having a different composition from that of the original matured spirit.

It might be thought that redistilling a matured spirit would totally destroy the benefit of maturing the spirit in the first place, but we have surprisingly found that this is not so. There can be only minor loss of the flavours associated with maturation. This is especially so when those flavours are associated with maturing in wood.

We preferably include in the reconstituted potable spirit some or all of the unvolatilised residue that is left behind during fractionation of the matured spirit.

Most preferably we filter the unvolatilised residue before it is included in the potable spirit mix.

We were surprised to find that the unvolatised residue left behind during fractionation had in it matter that is insoluble in water. This matter can be separated from the remainder of the unvolatilised residue by any suitable separation technique, including a process from the group comprising decantation, filtration or centrifugation.

We have found that including at least a small amount of the unvolatilised residue in the potable mix improves the taste and/or feel of the mix, and reduces any loss in the flavours associated with maturation.

Preferably the alcohol content of the potable spirit is about the same as that of the original matured spirit (some abv). Alternatively we could deliberately alter the alcohol content, either increasing it, or decreasing it. We may even be able to provide a "low alcohol spirit", or even an "alcohol free" drink that tastes reminiscent of a known spirit (e.g. whiskey).

We may filter the original matured spirit before fractionation.

The original matured spirit is preferably split into at least 2, or 3 temperature range fractions. It may have 3, 4, or more, fractions distilled off it.

We prefer to blend at least 2, or 3, or more, fractions which evaporate at different temperature ranges to produce the potable spirit. One of those fractions may be the unvolatilised fraction.

When the original matured spirit is distilled we have found that if we mix the distillate with the unvolatilised distillation residue from which substantially all insoluble matter has been removed, we get a product that has a smoother taste sensation than does the original matured spirit.

We have further found that when the distillation is conducted in such a way so as to obtain fractionation of the volatile substances, and a fraction containing largely alcohol is eliminated (or substantially reduced), and a fraction containing largely water is also largely eliminated (or substantially reduced), the spirit produced by blending the other volatile fractions and distillation residue from which substantially all insoluble matter has been removed has a particular excellence of flavour.

We preferably blend the fractions in proportions different from those in which they arise from the distillation. Most preferably, we prefer to store the resulting blend and preferably treat the stored blend according to any known treatment of matured spirits. The matured flavour in the starting spirit may include (but is not limited to) matured flavour derived from the storage of distilled spirits in wood.

According to a further aspect of the invention we provide a potable spirit produced in accordance with the preceding methods.

Preferably the spirit is whiskey, or brandy, or bourbon, or rum.

According to another aspect of the invention we provide apparatus for producing a potable spirit comprising a still, rectifying means, a condenser, fraction storing means adapted to receive fractions from the condenser, a residue vessel adapted to receive unvolatised liquid from the still, a filter, interposed between the still and the residue vessel, and mixing means adapted to mix volumes of liquids from at least some of the fraction storing means and/or the residue vessel.

Control means adapted to control the proportions of the fractions and unvolatised residue is preferably provided.

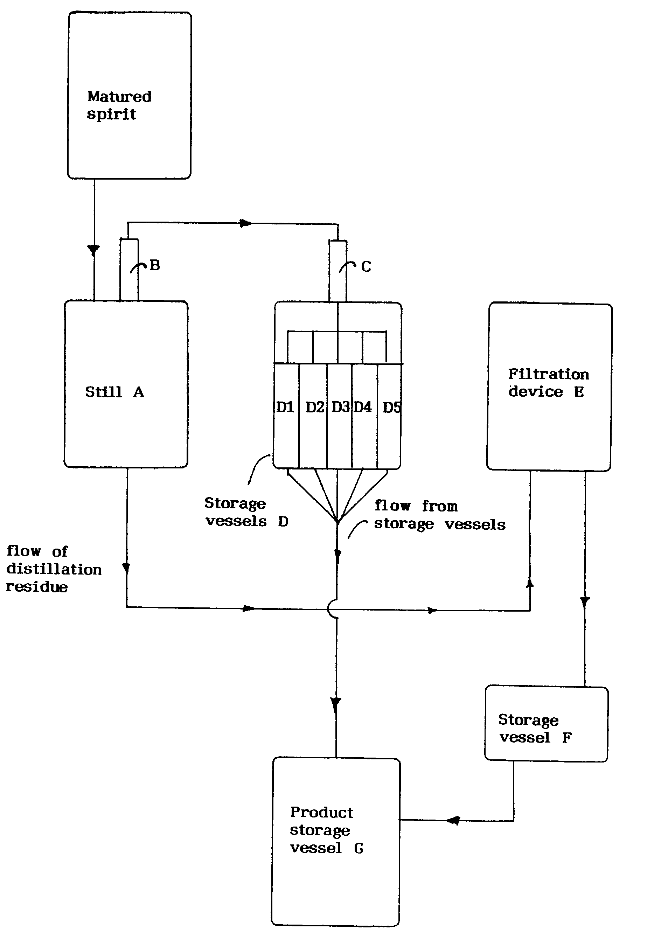

An embodiment of the invention will now be described by way of example only, with reference to the drawing that accompanies this application which shows schematically a process for producing a spirit drink.

Spirit, in this example whiskey, is matured for a number of years (e.g. 3 years), in this example in wooden containers such as barrels. The matured spirit is then processed to improve its flavour.

The accompanying drawing illustrates a still, referenced A; a rectifying or fractionating column B associated with the still A; a condenser C; a plurality of storage vessels associated with the condenser, referenced D1, D2, D3, D4, and D5; a filtration device E adapted to receive the distillation residue of the still A; a filtrate storage vessel F adapted to store the filtered liquid output by the filtration device E; a mixing device (not shown) adapted to mix the filtrate of storage vessel F with liquids from one or more of the storage vessels D1, D2, D3, D4 or D5; and a product storage vessel G adapted to store the mixed product.

The mixing device may simply comprise appropriate valves in the fluid flow lines leading from vessels D1, D2, D3, D4, D5 and vessel F. The liquids may be delivered directly into the product storage vessel G, or into a mixing chamber/tank upstream of storage vessel G.

The re-mixed spirit in vessel G is bottled/packaging by packaging means, not shown.

The process is as follows: matured spirit (e.g. whiskey) flows into still A where it is distilled and light fractions pass through the rectifying column B and onto the condenser C, the fractions being evolved in turn as the temperature is changed. In this example the matured spirit entering still A is split into a fraction that comes off at temperatures up to 80°C, which goes to D1; a fraction that comes off at 80°C, which goes to D2; a fraction that comes off in the range 80°C to 99°C, which goes to D3; and a fraction that comes off in the range 99-101°C, which goes to D4. D5 is not used in this example.

The unvaporised distillation residue in still A is allowed to cool and is then filtered by filtration device F. Device F could use any appropriate separation technique including decantation, filtration, or a centrifugal process. The filtration device F separates insoluble matter that we have found to be present in the residue from the liquid that is left behind.

A cooling device may be interposed in the line between the still A and the filtration device F. This may cool the residue liquid down to, say, room temperature, or room temperature ± 20°C.

In this example a volume, volume w of the liquid in D4 is mixed with a volume, volume x of the liquid in D3, and a volume, volume y, of the liquid in D2, and a volume, volume z, of the liquid in D4, and also with a volume, volume v, of liquid from the storage vessel F. The volumes w, x, y, z and v are chosen such that the resultant product has an alcohol content substantially the same as that of the matured spirit entering the still A. (This is predominantly controlled by volume x). One or more of the volumes w, x, y, z and v may be zero. The process will have concentrated the flavour-giving components of the spirit. We can effectively take out the water and alcohol, which have no strong flavour, and concentrate the other flavour-containing components of the original matured spirit, adding back as much or as little alcohol or water as is needed to achieve the desired alcohol content of the resultant mix. This can also allow us to avoid the need for a separate step, after maturation, of diluting the cask strength spirit down to bottle strength - our mixing step does that for us. One of the fractions we extract is largely pure water, and another largely pure alcohol.

In one particular version of the process we make a product mix having all of the fraction of the original matured spirit going to storage vessel F with all of the fraction going to D1, part of the fraction going to D2, part of the fraction going to D4, and with all of, or part of, the fraction going to D3.

This has been found to produce a potable spirit with enhanced smoothness and general flavour as compared with the original matured spirit that entered the still A.

We therefore, in one blend, remove some of the alcohol and water from the original matured spirit, effectively concentrating its taste to a level that would take many years if left to evaporate in the traditional way.

It will be appreciated that the process described is a continuously flowing process. However, we could run a batch distillation process instead.

It will be appreciated that the matured spirit entering the still A can have been matured in a variety of ways and for a variety of times.

For example, for whiskey we prefer to use whiskey that has matured for at least 3 years, preferably in wood. We prefer to use 3 year old whiskey rather than whiskey that has matured longer. Our process produces a smoother whiskey/spirit faster than can be done conventionally. We prefer to use a base matured spirit that has matured for the minimum time necessary to be allowed to sell it as that spirit. For example whiskey must be matured for 3 years, brandy for 2 years, and bourbon for 4 years, before the spirit can be sold called "whiskey", "brandy", or "bourbon". When we use our process in brandy and bourbon we propose starting with a spirit that has matured for 2 and 4 years respectively.

It will be appreciated that we may take the potable mix from the storage vessel G and bottle or sell it for immediate consumption. Alternatively we may treat the mix further before bottling/consumption. For example we may treat the mix or process it in any known way usually applied to matured spirits, including further maturation by standing around, and/or filtering it. Indeed, we may well filter the mix in vessel G before selling it.

The surprising formation of water-insoluble matter in the distillation residue left at the end of such a process and its removal and the effects thereof, are among the main components of this invention. A second inventive component is the effect on flavour which removal of some of the alcohol and water have in regard to blends made between some of the distillation fractions and the distillation residue, after removal of water-insoluble matter.

## Claims

1. A method of producing a potable spirit characterised by taking a matured spirit, fractionating it into a plurality of fractions and recombining at least a portion of at least some of the fractions to produce a potable spirit having a different composition to that of the matured spirit.

2. A method according to claim 1 wherein unvolatilised residue is left behind during fractionation of the matured spirit and wherein some or all of the unvolatilised residue is included in the reconstituted potable spirit.

3. A method according to claim 2 wherein the unvolatilised residue is filtered before being included in the potable spirit.

4. A method according to claim 2 or claim 3, wherein substantially all matter that is insoluble in water is removed from the unvolatilised residue.

5. A method according to any preceding claim, wherein the alcohol content of the potable spirit is substantially the same as that of the matured spirit.

6. A method according to any preceding claim, wherein the matured spirit is filtered before fractionation.

7. A method according to any preceding claim, wherein the matured spirit is distilled into at least two temperature range fractions.

8. A method according to any preceding claim, wherein at least two fractions are blended to produce the potable spirit.

9. A method according to claim 8, wherein one of the fractions is the unvolatilised fraction.

10. A method according to claim 8 or claim 9, wherein the fractions are blended in proportions different from those in which they arise from said fractionation.

11. A method according to any preceding claim, wherein the matured spirit includes matured flavour derived from the storage of distilled spirits in wood.

12. A method according to any preceding claim, wherein the potable spirit is stored after blending.

13. Apparatus for producing a potable spirit characterised in that it comprises a still (A), rectifying means (B), a condenser (C), fraction storing means (D1,D2,D3,D4,D5) adapted to receive fractions from the condenser (C), a residue vessel (F) adapted to receive unvolatilised liquid from the still (A), a filter (E) interposed between the still (A) and the residue vessel (F), and mixing means adapted to mix volumes of liquids from at least some of the fraction storing means (D1,D2,D3,D4,D5) and/or the residue vessel (F).

## Patentansprüche

1. Verfahren zum Herstellen eines alkoholischen Getränks,
**dadurch gekennzeichnet,** daß
ausgereifter bzw. abgelagerter Alkohol verwendet wird, dieser in eine Vielzahl von Fraktionen fraktioniert wird und wenigstens ein Teil von wenigstens einigen der Fraktionen wieder verbunden wird, um ein alkoholisches Getränk mit einer unterschiedlichen Zusammensetzung als derjenigen des ausgereiften bzw. abgelagerten Alkohols herzustellen.

2. Verfahren nach Anspruch 1,
**dadurch gekennzeichnet,** daß
nichtflüchtiger Rückstand während des Fraktionierens des ausgereiften bzw. abgelagerten Alkohols zurückgelassen wird, und daß ein Teil oder die Gesamtheit des nichtflüchtigen Rückstandes in dem wiederhergestellten alkoholischen Getränk beinhaltet ist.

3. Verfahren nach Anspruch 2,
**dadurch gekennzeichnet,** daß
der nichtflüchtige Rückstand gefiltert wird, bevor er dem alkoholischen Getränk zugegeben wird.

4. Verfahren nach Anspruch 2 oder 3,
**dadurch gekennzeichnet,** daß
im wesentlichen alle Substanzen, welche in Wasser unlöslich sind, von dem nichtflüchtigen Rückstand entfernt werden.

5. Verfahren nach einem der vorhergehenden Ansprüche,
**dadurch gekennzeichnet,** daß
der Alkoholgehalt des alkoholischen Getränkes im wesentlichen der gleiche ist wie derjenige des ausgereiften bzw. abgelagerten Alkohols.

6. Verfahren nach einem der vorhergehenden Ansprüche,
**dadurch gekennzeichnet,** daß
der ausgereifte bzw. abgelagerte Alkohol vor der Fraktionierung gefiltert wird.

7. Verfahren nach einem der vorhergehenden Ansprüche,
**dadurch gekennzeichnet,** daß
der ausgereifte bzw. abgelagerte Alkohol in mindestens zwei Temperaturbereichs-Fraktionen destilliert wird.

8. Verfahren nach einem der vorhergehenden Ansprüche,
**dadurch gekennzeichnet,** daß
mindestens zwei Fraktionen miteinander vermischt werden, um das alkoholische Getränk herzustellen.

9. Verfahren nach Anspruch 8,
**dadurch gekennzeichnet,** daß
eine der Fraktionen die nichtflüchtige Fraktion ist.

10. Verfahren nach Anspruch 8 oder 9,
**dadurch gekennzeichnet,** daß
die Fraktionen in Verhältnissen vermischt werden, welche unterschiedlich von denjenigen sind, in welchen sie durch die Fraktionierung hervorgehen.

11. Verfahren nach einem der vorhergehenden Ansprüche,
**dadurch gekennzeichnet,** daß
der ausgereifte bzw. abgelagerte Alkohol einen ausgereiften Geschmacksstoff enthält, welcher von dem Lagern des destillierten Alkohols in Holz herrührt.

12. Verfahren nach einem der vorhergehenden Ansprüche,
**dadurch gekennzeichnet,** daß
das alkoholische Getränk nach dem Vermischen gelagert wird.

13. Vorrichtung zur Herstellung eines alkoholischen Getränks,
**dadurch gekennzeichnet,** daß
es einen Destillierkolben (A), eine Destilliereinrichtung (B), eine Vorlage (C), Fraktionslagereinrichtungen (D1,D2,D3,D4,D5), welche zum Aufnehmen der Fraktionen von der Vorlage (C) vorgesehen sind, ein Restegefäß (F), welches zum Aufnehmen von nichtflüchtiger Flüssigkeit von dem Destillierkolben (A) vorgesehen ist, einen Filter (E), welcher zwischen dem Destillierkolben (A) und dem Restegefäß (F) angeordnet ist, und eine Mischeinrichtung aufweist, welche zum Mischen der Flüssigkeitsvolumina von wenigstens einigen der Fraktionslagereinrichtungen (D1,D2,D3,D4,D5) und/oder des Restegefäßes (F) vorgesehen ist.

## Revendications

1. Méthode de production d'une boisson alcoolisée, caractérisée en ce que l'on prend un alcool arrivé à maturité, en ce qu'on le fractionne en une pluralité de fractions et en ce qu'on recombine au moins une partie d'au moins certaines fractions pour produire une boisson alcoolisée ayant une composition différente de celle de l'alcool arrivé à maturité.

2. Méthode selon la revendication 1, dans laquelle un résidu non volatilisé est écarté au cours du fractionnement de l'alcool arrivé à maturité et dans laquelle tout ou partie du résidu non volatilisé est inclus dans la boisson alcoolisée reconstituée.

3. Méthode selon la revendication 2 dans laquelle le résidu non volatilisé est filtré avant d'être inclus dans la boisson alcoolisée.

4. Méthode selon la revendication 2 ou 3, dans laquelle quasiment toute matière insoluble dans l'eau est éliminée du résidu non volatilisé.

5. Méthode selon l'une quelconque des revendications précédentes, dans laquelle la teneur en alcool de la boisson alcoolisée est essentiellement la même que celle de l'alcool arrivé à maturité.

6. Méthode selon l'une quelconque des revendications précédentes, dans laquelle l'alcool arrivé à maturité est filtré avant fractionnement.

7. Méthode selon l'une quelconque des revendications précédentes, dans laquelle l'alcool arrivé à maturité est distillé en deux fractions de plages de températures distinctes.

8. Méthode selon l'une quelconque des revendications précédentes, dans laquelle au moins deux fractions sont mélangées pour produire la boisson alcoolisée.

9. Méthode selon la revendication 8 dans laquelle une des fractions est la fraction non volatilisée.

10. Méthode selon la revendication 8 ou la revendication 9 dans laquelle les fractions sont mélangées en proportions différentes de celles se présentant à l'issue dudit fractionnement.

11. Méthode selon l'une quelconque des revendications précédentes, dans laquelle l'alcool arrivé à maturité comprend des arômes de maturation dérivés de la conservation d'alcools distillés dans du bois.

12. Méthode selon l'une quelconque des revendications précédentes, dans laquelle la boisson alcoolisée est conservée après mélange.

13. Appareil pour la production d'une boisson alcoolisée, caractérisé en ce qu'il comprend un alambic (A), des moyens de rectification (B), un condensateur (C), des moyens de conservation de fractions (D1, D2, D3, D4, D5) adaptés pour recevoir des fractions du condensateur (C), un récipient de résidu (F) adapté pour recevoir le liquide non volatilisé de l'alambic (A), un filtre (E) disposé entre l'alambic (A) et le récipient de résidu (F) et des moyens de mélange adaptés pour mélanger des volumes de liquide d'au moins certains des moyens de conservation de fractions (D1, D2, D3, D4, D5) et/ou du récipient de résidu (F).
